**Europäisches Patentamt**

**European Patent Office**

**Office européen des brevets**

(19)

(11) Veröffentlichungsnummer: **0 113 823**
**B2**

(12) **NEUE EUROPÄISCHE PATENTSCHRIFT**

(45) Veröffentlichungstag der neuen Patentschrift:
**13.06.90**

(51) Int. Cl.⁵: **B 44 C 1/24,** B 44 C 3/08,
B 44 B 5/00

(21) Anmeldenummer: **83111050.7**

(22) Anmeldetag: **05.11.83**

(54) Verfahren zur Herstellung von Schichtpress-Stoffen mit strukturierter Oberfläche und Vorrichtung zur Durchführung des Verfahrens.

(30) Priorität: **21.12.82 DE 3247146**

(43) Veröffentlichungstag der Anmeldung:
**25.07.84 Patentblatt 84/30**

(45) Bekanntmachung des Hinweises auf die
Patenterteilung:
**30.07.86 Patenblatt 86/31**

(45) Bekanntmachung des Hinweises auf die
Entscheidung über den Einspruch:
**13.06.90 Patentblatt 90/24**

(84) Benannte Vertragsstaaten:
**FR GB IT SE**

(56) Entgegenhaltungen:
**EP-A-0 031 613**
**DE-A-1 629 405**
**DE-A-2 049 940**
**DE-A-2 121 010**
**DE-A-2 808 626**
**DE-A-2 950 795**

**FR-A-2 067 860**
**FR-A-2 283 017**
**FR-A-2 379 387**
**GB-A-1 083 072**
**IT-A- 460 781**

**Zeitschrift "Holz- und Kunststoffverarbeitung"**
**11/82, S. 996-1000**
**"Coating" 11/73, S. 340**

(73) Patentinhaber: **Held, Kurt**
**Alte Strasse 1**
**D-7218 Trossingen 2 (DE)**

(72) Erfinder: **Held, Kurt**
**Alte Strasse 1**
**D-7218 Trossingen 2 (DE)**

EP 0 113 823 B2

## Beschreibung

Die Erfindung betrifft ein Verfahren zur kontinuierlichen Herstellung von Schichtpreß-Stoffen mit einer in die Oberfläche eingeprägten Strukturierung, bei dem die aus duroplast-harzimprägnierten Papierbahnen geschichtete Bahn mit einer Negativ-Strukturträgerprägebahn, die von einer Vorratsrolle abgewickelt wird, mit gleicher Geschwindigkeit zusammengeführt wird, das Schichtgebilde einer Pressung mit anschließender Abkühlung unterworfen und die Bahn mit positiv strukturierter Oberfläche vom Strukturträger getrennt, deren nichtstrukturierte, rückseitige Oberfläche aufgerauht und diese Bahn anschließend auf Rollen aufgewickelt bzw. in Platten beliebiger Länge gestapelt wird unter gleichzeitigem Aufwickeln des Strukturträgers.

Weiter betrifft die Erfindung eine Vorrichtung zur Durchführung dieses Verfahrens mit einer aus oberen und unteren Vorratsrollen bestehenden Abwickeleinheit für die harzimprägnierten Bahnen, mit einer Abspuleinheit für den Strukturträger, mit einer als Doppelbandpresse ausgebildeten Laminiermaschine, mit einer Kühleinrichtung, einer Schleifstation für die Rückseite der Materialbahnen, mit einer Wickelstation mit Rollen für den Schichtpreßstoff bzw. mit einer Tafelschneidestation zur Aufteilung der SchichtpreßStoffbahn in Schichtstofftafeln beliebiger Länge und deren Aufstapelung in Paletten und einer aus dem Strukturträger, den Strukturträgerrollen und einer Strukturträgeraufwickelrolle gebildeten Strukturiereinrichtung.

Bei der Gestaltung von Arbeits-, Wirtschafts-, Wohn- und Schlafräumen, sowie im Möbel- und Fahrzeugbau haben sich Hartfaserplatten, Holzfaserplatten, Glasfaserplatten, usw. mit einer dekorativen Oberflächenschicht seit Jahren durchgesetzt, vor allem aufgrund des Vorteils, daß diese Werkstoffe nach der Fertigung bereits mit einer endgültigen Oberfläche von besonderer Härte, Kratz- und Abriebfestigkeit und Beständigkeit gegen Chemikalien versehen sind. Diese Oberflächenschicht besteht bei den Produkten, die auf dem Markt eingeführt sind, aus einem Laminat, das wiederum aus mehreren Lagen von kunstharzgetränkten Papieren besteht.

Dieses Laminat wird im Kern gewöhnlicherweise durch eine Anzahl von Lagen phenolharzgetränkter dicker Papiere gebildet. Auf diesen liegt ein Barrierefilm, der ein Durchscheinen der Phenolschicht verhindern soll. Darüber liegt der Dekorfilm, der schließlich zum Schutz durch den harzreichen und dadurch durchsichtigen Overlay-Film abgeschlossen wird. Die äußeren Papiere der Oberflächenschicht sind mit Melaminharzen getränkt, die eine hohe Beständigkeit gegen Wasser und große Härte aufweisen. Die außen vorhandene Preßhaut aus reinem Harz sorgt für eine Versiegelung der Oberfläche, die wiederum die chemische Beständigkeit und geringe Wasseraufnahme bewirkt.

In zunehmendem Maße werden bei diesen Produkten vom Käufer auch in die Oberfläche eingeprägte Strukturierungen mit beliebigen Mustern verlangt. Diese Muster bestehen beispielsweise aus Noppen, Riffelungen, geometrischen Ornamenten, Feinkornstrukturierungen, sowie Imitationen der Holzmaserung. Die Strukturierung geschieht dabei im allgemeinen mit Hilfe von Prägewerkzeugen während der Fertigung.

Zur Herstellung solcher Platten lassen sich im wesentlichen zwei Verfahren unterscheiden.

Beim ersten Verfahren werden mit Vorkondensationsprodukten wie Melaminharzen imprägnierte und getrocknete Papierlagen auf die zu veredelnde Oberfläche aufgelegt und durch Anwendung von Hitze und Druck aufgepreßt. Bei der Fertigung von Spanplatten mit einer dekorativen Oberflächenschicht hat man auch schon versucht, die Pressung der Spanplatte und das Aufbringen der Oberflächenschicht in einem Arbeitsgang durchzuführen, indem auf die Papierlagen der Spänekuchen aufgestreut und anschließend zusammen mit den Harzpapieren unter Hitzeeinwirkung verpreßt wird.

Beim zweiten Verfahren schließlich werden die imprägnierten Papierfilme in mehreren Lagen unter Erhitzen zu einer Preßschichtstoffplatte gepreßt, die in einem zweiten Arbeitsgang auf die zu veredelnde Oberfläche aufgeklebt wird.

Obwohl das zweite Verfahren gegenüber dem erstgenannten aufwendiger erscheint, gewinnt es immer mehr an Bedeutung, da es entscheidende Vorteile aufweist. Das erste Verfahren ist infolge der Empfindlichkeit von Holzwerkstoffen gegen Druck nur beschränkt anwendbar. Die dabei entstehende Oberfläche erfüllt, was Kratzfestigkeit und Härte anbelangt, nicht dieselben Anforderungen wie eine Preßschichtstoffplatte. Das bei der Herstellung von Spanplatten verfahrenstechnisch benötigte Wasser bewirkt eine Quellung der Späne, was bei der Ungleichheit der eingesetzten Späne zu unterschiedlichen Aufquelleffekten und damit zu einer unebenen Oberfläche der Spanplatte und damit auch der veredelten Oberfläche führt. Eine Begradigung der Oberfläche durch Nachschleifen kann hier nicht mehr erfolgen. Weiter versucht der durch Hitzeeinwirkung in der Spanplatte entstehende Wasserdampf durch die Oberfläche zu entweichen und kann dadurch zu Blasen- und Rißbildung in der Kunststoffoberfläche führen. Damit ist aber die Spanplatte unbrauchbar. Das zweite Verfahren vermeidet aufgrund der Teilung der Fertigung in zwei Arbeitsgänge diese Nachteile. Als weiterer Vorteil ergibt sich zusätzlich, daß durch Verwendung dünner Schichtstoffe die Herstellung von runden Kanten ermöglicht wird, was Sicherheitsforderungen vor allem im Fahrzeug- und Möbelbau, beispielsweise im Kinderzimmer, entgegenkommt. Aufgrund dieser Vorteile wird der Bedarf an strukturierten Schichtstoffplatten immer größer.

Der Fertigungsablauf bei der Herstellung von Schichtstoffpreßplatten läuft wie folgt ab. Die mit Bindemittel durchtränkten papierbahnen werden verlegt, das heißt es erfolgt eine Aufschichtung der je nach Plattenstärke benötigten Anzahl von Papieren, anschließend das Verpressen in einem Hochdruckpreßverfahren, das die Papiere miteinander zu einer Platte verklebt und zuletzt das Besäumen, wobei der Preßrand aus dem drucklos ausgehärteten beharzten Papier entfernt wird. Meistens erfolgt anschließend noch ein Aufrauhen der Rückseite des Schichtstoffes auf Schleifmaschinen, um sie leimfähig zu machen. Zur Durchführung des Verpressens werden diskontinuierliche und kontinuierliche Verfahren angewendet.

Bei den diskontinuierlichen Verfahren werden die mit Harz getränkten und vorkondensierten Papierfilme zu Paketen geschichtet und mit Preßblechen, die eine negative Strukturierung entsprechend dem gewünschten Muster besitzen, abgedeckt. Mehrere dieser Pakete werden anschließend in einer Einetagenpresse zu Schichtstoffplatten mit der gewünschten Dberflächenprägung gepreßt.

Ein Wechsel der Dekorprägung ist leicht möglich durch Austausch der Preßbleche. Aufgrund der Arbeitsweise der Einetagenpressen ist es ersichtlich, daß die Schichtstoffplatten eine maximale Länge besitzen, womit bei der Verarbeitung im allgemeinen Verschnitt anfällt. Die Lagerung solcher flächenmäßig ausgedehnter Schichtstoffplatten stellt außerdem Probleme wegen des Platzbedarfs und möglichen Verzugs der Platten. Da zudem die imprägnierten Papierbahnen meistens auf Rollen angeliefert werden, bietet sich ein kontinuierliches Fertigungsverfahren an. Bei dünnen Schichtstoffplatten besitzt man dann weiterhin die Möglichkeit, diese nach der Fertigung aufzurollen, womit die Lagerhaltung und Weiterverarbeitung wesentlich vereinfacht wird.

Zur kontinuierlichen Herstellung von Schichtstoffen ohne Oberflächenstrukturierung sind Maschinen bekannt, bei denen eine Laminatbahn zwischen zwei in entgegengesetzten Drehrichtungen umlaufenden Bändern gepreßt wird. Zur Strukturierung der Oberfläche einer solchen Laminatbahn ist es naheliegend, bei diesen Maschinen ein entsprechend dem gewünschten Muster negativ strukturiertes Prägeband einzusetzen. Bei der Herstellung eines solchen Prägebandes nach der Ätzmethode, die dem Stand der Technik entspricht, treten jedoch an der diagonal oder quer verlaufenden Schweißnaht auf dem Endlosband Schwierigkeiten auf, da das infolge des Schweissens veränderte Gefüge ein gegenüber dem restlichen Band unterschiedliches Ätzverhalten zeigt, so daß sich die Schweißnaht auf dem Laminat abzeichnet Bekannt ist, diese Schwierigkeit zu umgehen, indem auf das Endlosband eine Metallschicht aufgalvanisiert wird, deren Dicke größer als die Tiefe der Ätzgravur ist und erst anschließend die negative Struktur durch Ätzen einzuarbeiten (EP-A-0 031 613).

Diese bekannte Lösungsmethode hat den Nachteil, daß die Herstellung eines strukturierten Preßbandes für Doppelbandpressen mit einem großen kostenverursachenden Aufwand verbunden ist. Weitere Nachteile sind in der Verwendung eines Endlos-Preßbandes als Prägeband zu sehen. Bei einem Wechsel des Prägemusters für die Schichtstoffplatten ist das gesamte Prägeband zu wechseln, was bedeutet, daß die Produktion angehalten, die Maschine geöffnet. das Prägeband getauscht und anschließend die Maschine wieder aufgeheizt werden muß, ehe die Produktion wieder aufgenommen werden kann. Ein Oberflächenwechsel verursacht damit Kosten aufgrund des produktionsausfalls sowie für die anfallende Rüstzeit. Außerdem ist die Lagerhaltung vieler verschiedener Prägestrukturen wegen des hohen Investitionsaufwandes für ein Prägeband praktisch unmöglich. Eine flexible Reaktion auf verschiedene Marktsituationen ist aus diesen Gründen nicht möglich. Damit werden die Vorteile des kontinuierlichen Verfahrens gegenüber dem diskontinuierlichen wieder teilweise zunichte gemacht.

Zur kontinuierlichen Herstellung einer oberflächenstrukturierten Schichtpreß-Stoffbahn ist es auch bekannt, papierkaschierte und mit Aluminium kaschierte Releasepapiere auf der Oberfläche dieser Laminatbahn durch die Doppelbandpresse mitzuführen. In der Zeitschrift "Holz- und Kunststoffverarbeitung 11/82," Seite 996 ff. wird schematisch eine Doppelbandpressenanlage zur Herstellung dekorativer Schichtpreß-Stoffe gezeigt, bei der Abwickelstationen für die beharzten papierbahnen und eine Abwickelstation für das Releasepapier vor der Doppelbandpresse angeordnet sind. In der Doppelbandpresse wird die Strukturierung durch das auf der Oberfläche der geschichteten Papierbahnen aufliegende Releasepapier eingepreßt. Hinter der Doppelbandpresse folgt eine Aufwickelstation für das Releasepapier, eine Kühlstation für die Schichtpreß-Stoffbahn sowie eine Schleifstation. Nach Verlassen der Schleifstation kann die Schichtpreß-Stoffbahn aufgewickelt oder aufgeteilt werden.

Nachteilig bei diesem bekannten Verfahren ist. daß sich die Strukturierung der Oberfläche auf ein einziges Muster beschränkt, nämlich auf das Zufallsmuster des Releasepapieres. Andere wünschenswerte und unterschiedliche Strukturierungen sind somit nicht herzustellen, womit wiederum die Forderungen des Marktes nicht erfüllt werden können. Mit dem gezeigten Verfahren kann nur jeweils eine einzige strukturierte Schichtpreß-Stoffbahn in der Doppelbandpresse hergestellt werden, womit der Ausstoß dieses Verfahrens im Vergleich zum diskontinuierlichen Verfahren, bei dem mehrere Pakete von beharzten Papieren gleichzeitig verpreßt werden, sehr viel geringer ist. Außerdem ist die konventionelle Schleifstation der beschriebenen Doppelbandpressenanlage für einen Hochleistungsbetrieb mit erhöhtem Ausstoß nicht geeignet.

Durch die Patentschrift FR-A-2 067 860 ist weiter ein kontinuierliches Verfahren und eine Vorrichtung bekannt geworden, das zur Herstellung einer strukturierten Oberfläche auf einer mit einem thermoplastischen Überzug beschichteten Textilträgerbahn dient. Der Textilträger wird von einer Rolle abgezogen und bis zum Erweichungspunkt der Beschichtung erwärmt. Danach wird die Trägerbahn mit einer Zellophanbahn zusammengeführt und diese unter dem Druck zweier Walzen mit der beschichteten Oberfläche in Kontakt gebracht. Nach Verlassen des Walzenspaltes wird die Trägerbahn mit aufgelegter Zellophanbahn zugspannungsfrei geführt, so daß die Zellophanbahn während der Abkühlung Falten wirft und dadurch ein unregelmäßiges Muster in die Thermoplastschicht einprägt. Anschließend läuft das Gebilde über eine Abkühlungstrommel, wobei die Zellophanbahn von der mit einer Oberflächenstrukturierung versehenen Trägerbahn abgezogen wird und beide Bahnen getrennt auf einer Rolle aufgewickelt werden.

Auch bei diesem Verfahren ist die Zellophanbahn nur geeignet zur Herstellung eines einzigen Musters, nämlich einer Zufallsstruktur. Damit können die Wünsche des Marktes nach unterschiedlichen Mustern nicht erfüllt werden. Außerdem ist dieses Verfahren nicht zur Herstellung von SchichtpreßStoffen, die aus mit duroplastischen Harzen getränkten papieren bestehen, geeignet, sondern nur zur Strukturierung von Thermoplastschichten. Der Druck zwischen den zwei Walzen auf die Zellophanbahn wirkt nur linienförmig und kurzzeitig, so daß die Aushärtung der strukturierten Beschichtung drucklos erfolgt. Gerade bei duroplastischen Harzen ist jedoch unbedingt erforderlich, daß der Druck gleichmäßig und flächenhaft während der gesamten Aushärtungszeit des Harzes unter gleichzeitiger Strukturierung der Oberfläche einwirkt.

Schließlich ist aus der IT-PS 460 781 ein Verfahren zur Herstellung von Dekorplatten bekannt geworden, bei dem eine mit Duroplastharz getränkte Papierschicht auf eine aus Furnierholz oder Holzfaserplatten bestehende Trägerplatte unter Zwischenlage eines harzgetränkten, dünnen Kartons aufgepreßt wird. Zur Erzeugung eines Musters oder einer Struktur auf der Oberfläche der Dekorplatte kann auf dem beharzten Papier ein Gitter oder ein Lochblech während der Verpressung aufgelegt sein. Zur gleichzeitigen Herstellung zweier Dekorplatten kann die Schichtung so erfolgen, daß die beharzten Papierschichten auf je einer Seite des Gitters aufliegen, anschließend an die beharzten Papierschichten die beharzten Kartons folgen und auf diesen dann die Trägerplatten aufliegen. Die der Beschichtung abgewandte Seite der Trägerplatten liegt an den Preßstempeln der Etagenpresse an.

Es handelt sich bei diesem Verfahren um ein gattungsfremdes Verfahren, nämlich um die Direktbeschichtung von Trägerplatten und nicht um die Herstellung von dazu völlig unterschiedlichen Schichtpreß-Stoffen. Durch die Verwendung der gezeigten Etagenpresse werden beschichtete Trägerplatten mit einer bestimmten Länge erzeugt, so daß bei deren Weiterverarbeitung Verschnitt anfällt. Zwar wird in der italienischen Patentschrift ein Kalander als kontinuierlich arbeitende Presse erwähnt, jedoch ohne nähere Ausführungen wie das beschriebene Verfahren auf einem solchen Kalander ablaufen soll, so daß dieses Verfahren im wesentlichen wohl diskontinuierlich ist und für die kontinuierliche Herstellung von bahnförmigen, strukturierten Schichtpreß-Stoffen wenig Anregungen gibt. Das Gitter oder Lochblech ist nur mit einem einzigen Prägemuster versehen, wodurch ein schneller Prägedekorwechsel ohne Austausch des Gitters oder Lochblechs mit diesem Verfahren nicht möglich ist.

Der Erfindung liegt die Aufgabe zugrunde, ein kontinuierliches Verfahren der eingangs genannten Art entsprechend der Zeitschrift "Holz- und Kunststoffverarbeitung 11/82" so weiterzuentwikkeln, daß es geeignet zur Herstellung von Schichtpreß-Stoffen mit einer in der Oberfläche eingeprägten beliebigen Strukturierung ist, wobei ein Prägedekorwechsel ohne großen Zeit- und Energieverlust leicht möglich sein soll. Zusätzlich soll es ermöglicht werden, den Ausstoß einer kontinuierlich arbeitenden Laminiermaschine, die nach dem erfindungsgemäßen Verfahren arbeitet, gegenüber den bisherigen Verfahren etwa zu verdoppeln, damit eine weitere Leistungssteigerung des kontinuierlichen Verfahrens erreicht wird.

Die Lösung dieser Aufgabe wird durch die technische Lehre vermittelt, daß die nicht unter 100 Mikrometer dicke Negativ-Strukturträgerprägebahn eine metallische, harte, verschleißfeste Oberfläche besitzt und mit verschiedenen Prägemustern versehen ist, daß die Strukturträgerprägebahn vor- oder zurückgefahren wird, bis der Anfang des gewünschten Musters erreicht ist, daß man die Materialbahnen so schichtet, daß die Oberfläche ihrer Rückseiten jeweils auf einer Fläche der Preßeinrichtung und ihrer Vorderseiten jeweils auf einer Seite des Strukturträgers liegen, so daß der Strukturträger zwischen zwei Materialbahnen geführt wird und daß das Aufrauhen der Rückseiten der Materialbahnen mittels Diamantbürsten erfolgt.

Bei der Vorrichtung zur Durchführung des diese Aufgabe lösenden Verfahrens ist die Kühleinrichtung als Sprühwasserkühleinrichtung ausgebildet, ein Schaltschrank mit Datensichtgerät vorgesehen, die Schleifstation mit Diamantbürsten ausgestattet, der Strukturträger mit verschiedenen Prägedekoren auf beiden Seiten oder mit mehreren verschiedenen Prägedekoren ausgestattet, bei denen die Summen der Einzellängen jedes Dekors auf einer Seite des Strukturträgers genau der Gesamtlänge desselben entspricht, der Strukturträger zwischen den beiden die Vorderseite der Schichtpreß-Stoffe bildenden duroplast-harzimprägnierten Papierbahnen angeordnet und die Strukturiereinrichtung mit Motoren ausgestattet, so daß der Strukturträger zwischen der Strukturträgeraufwickelrolle und den Strukturträgerrollen vorund rückspulbar ist.

Die gemäß Erfindung erzielbaren Vorteile bestehen darin, daß ein Prägedekorwechsel ohne Abschalten und Öffnen der Laminiermaschine ermöglicht wird durch einfaches Vor- bzw. Zurückspulen des Strukturträgers bis zum gewünschten Oberflächenstrukturmuster. Dazu braucht die Laminiermaschine nicht abgeschaltet zu werden, sondern es genügt, den Druck von den Endlosbändern zu nehmen. Der bei einem der bisher praktizierten Verfahren durch Austausch des Prägebandes in der Laminiermaschine auftretende Energieverlust und Produktionsausfall entfällt daher. Da die verschiedenen Strukturträger auf Rollen aufgewickelt werden können, ist die Lagerhaltung gegenüber den sperrigen Prägebändern sehr vereinfacht. Bei einem bisher bekannten Verfahren zur Herstellung von Prägebändern aus einem Endlosband muß die vorhandene Schweißnaht durch ein aufwendiges Verfahren kaschiert werden. Da der Strukturträger nicht endlos, sondern auf einer Rolle aufgewickelt ist, kann die Schweißnaht entfallen. Außerdem existieren die bisher aufgetretenen Probleme mit der nahtfreien Bemusterung eines Endlosbandes nicht mehr, so daB die Herstellung eines Strukturträgers sehr viel kostengünstiger verläuft. Aus diesen Gründen ist es möglich, viele verschiedene Strukturierungen bereitzuhalten und damit flexibel auf die Erfordernisse des Marktes zu reagieren.

Der Strukturträger, der von einer Rolle vor der Laminiermaschine abgewickelt wird, läuft zusammen mit den die Laminatbahnen bildenden, ebenfalls von Rollen abgewickelten, mit vorkondensiertem Harz imprägnierten Papierbahnen in die Laminiermaschine ein, wobei die Laminatbahnen so geschichtet werden, daß ihre Rückseiten jeweils auf einem Endlosband liegen, während ihre Oberflächen jeweils auf einer Seite des Strukturträgers liegen. Zwischen den Endlosbändern der Laminiermaschine prägt sich mit Hilfe des durch die Endlosbänder ausgeübten Drucks die Struktur in die Oberfläche der Laminatbahnen ein, während das Laminiergut unter Einwirkung von Hitze und Druck zum Schichtstoff aushärtet. Durch den dazwischen liegenden Strukturträger lassen sich die Schichtstoffe nach dem Verlassen der Maschine ohne Schwierigkeiten trennen, und man erhält ungefähr den doppelten Ausstoß an Schichtstoffen. Der Strukturträger ist mit verschiedenen Prägedekoren auf beiden Seiten oder mit mehreren verschiedenen Prägedekoren ausgestattet, bei denen die Summen der Einzellängen jedes Dekors auf einer Seite des Strukturträgers genau der Gesamtlänge desselben entspricht, so daß in einem Arbeitsgang auch zwei Schichtstoffe mit verschiedenem Prägedekor kontinuierlich erzeugt werden können.

Bei diesem Verfahren läßt sich durch eine besondere Ausgestaltung der Erfindung die Effektivität noch erhöhen. Wird die Breite des Strukturträgers mindestens zweimal um die Breite des Preßrandes vom Laminat vermindert, so kann der Strukturträger zwischen den beiden Laminatbahnen eingeschlossen werden, womit es ermöglicht wird, die zweifache Laminatbahn durch Sprühwasser abzukühlen, ohne daß befürchtet werden müßte. den Strukturträger durch das Kühlwasser zu beeinträchtigen. Dabei können höhere Temperaturen angewendet werden, um die Durchlaufgeschwindigkeit der Laminatbahn durch die Presse zu steigern oder um zu einer verkürzten, billigeren Ausbildung der Laminiermaschine zu kommen. Anschließend wird in einer Schleifstation zwischen zwei Diamantbürsten die Rückseite der Schichtstoffe aufgerauht, um das Verleimen des Schichtstoffes auf einem Träger zu erleichtern. Danach erst werden die zwei Schichtstoffbahnen durch Besäumen des Preßrandes getrennt, auf zwei Rollen aufgewickelt oder in Tafeln der gewünschten Länge zerschnitten und der Strukturträger auf der entsprechenden Rolle aufgewickelt.

Der entsprechend dem erfindungsgemäßen Verfahren in mehrere Abschnitte beliebiger Einzellänge eingeteilte Strukturträger, die aufsummiert gerade die Gesamtlänge des Strukturträgers ergeben und mit verschiedenen Prägemustern versehen sind, erleichtern einen Wechsel des Prägedekors außerordentlich. Ist ein solcher Musterwechsel gewünscht, so werden die Preßbänder in der Laminiermaschine vom Druck entlastet und der Strukturträger durch zwei an den Wickelstationen sitzende Motoren soweit voroder zurückgefahren, bis der Anfang des gewünschten Musters erreicht ist. Anschließend werden die Preßbänder wieder mit Druck beaufschlagt und die Schichtstoffproduktion läuft weiter Selbstverständlich kann diese Prozedur auch durchgeführt werden durch vollständiges Zurückspulen des Strukturträgers, wenn das Ende desselben erreicht ist. Wird ein Prägedekor gewünscht, das nicht auf dem gerade in Benutzung befindlichen Strukturträger ist, so muss die Strukturträgerrolle gegen eine solche ausgetauscht werden, auf der sich das gewünschte Muster befindet. Es ist dabei hervorzuheben, dass auch hier lediglich die Pressbänder vom Druck entlastet werden müssen, aber keinesfalls nötig ist, die Maschine abzuschalten. Die Zeit, um auf eine andere Strukturierung zu wechseln, wird so auf ein Minimum von wenigen Minuten beschränkt und der Energie- und Zeitverlust durch erneutes Aufheizen der Maschine entfällt völlig.

Im folgenden werden Strukturträger aufgeführt, die sowohl ein- als auch zweiseitig strukturiert sein können.

Die Darstellung eines ein- oder zweiseitigen Strukturträgers aus zwei metallischen Folien, die mit einer wärmebeständigen Duroplastkleberschicht miteinander verbunden sind, kann besonders vorteilhaft in einer Doppelbandpresse selbst erfolgen. Dabei wird das Folien-Kleber-Paket zusammen mit Beiläuferbahnen wie Pergament, Büttenpapier, Glasfaservlies, Metallgewebe, textilem Gewebe auf beiden Aussenseiten des herzustellenden Strukturträgers durch die Reaktionszone der Doppelbandpresse gefahren und gleichzeitig die Metall-Folienoberfläche durch die Beiläuferbahnen gegen den Kleberfilm geprägt sowie durch Wärmezufuhr ausgehärtet. Die geprägte Kupferfolie wird anschliessend mit einer dekorativ-matten Hartchromschicht abgedeckt und verschleissfest gemacht.

Strukturträger zur Imitation von Gewebe-, Faser- und Kornstrukturierungen erhält man durch Verpressen einer Fasermatrize mit duroplastischem, chemisch oder wärmeaushärtendem Bindemittel zwischen negativ geprägten Releasepapieren, Pergament, Büttenpapier, Glasfaservlies, Metallgewebe oder textilem Gewebe. Die strukturierten Materialien prägen dabei ihr prägedekor in die Oberfläche der Fasermatrize ein. Nach dem Aushärten des duroplastischen Kunststoffes werden die aufgelegten strukturierten Materialien entfernt und die Oberflächen, wie bei Kunststoffoberflächen bekannt, durch Verkupfern und dekorativem Hartverchromen gegen Verschleiss geschützt. Der Duroplastschichtstoff kann dann als Strukturträger in dem Verfahren nach Anspruch 1 eingesetzt werden.

Einen Strukturträger zur Imitation eines Gewebe- oder Fasermusters erhält man auf die folgende Weise: Zwischen zwei Bahnen eines plastischen metallischen Materials, beispielsweise einer Kupferfolie, einer elastischen Schicht, z. B. eine Gummischicht, oder einer plastichen Schicht, z. B. Natronkraftpapier, bettet man eine Beiläuferbahn. die aus einer Gewebeschicht von Jute, Textilfasern, Pergament, Büttenpapier. Glasfaservlies, Metallgewebe oder ähnlichen Materialien sein kann, ein. Diese Zwischenschicht drückt sich als Abbild ihrer Struktur in elastische oder plastische Schicht ein, die sich als Polsterbahn gegen die Pressbänder der Doppelbandpresse abstützt. Die drei Schichten werden durch eine wärmebeständige Duroplastkleberschicht miteinander verbunden. Anschliessend werden die Oberflächen zum Schutz gegen Verschleiss hartverchromt. Durch die äussere geschlossene Deckschicht wird ein müheloses Entfernen des Trägers vom Schichstoff ermöglicht. Diese Gewebestruktur auf den Schichtstoffen eignet sich besonders für Arbeitsplatten und Prägedekore im Küchenbereich.

Eine Kornstruktur erhält man durch auf eine mit einer Kleberschicht versehene plastische metallische Bahn zufällig gestreute Körper. Diese Bahn wird mit einer weiteren plastischen Bahn abgedeckt, so dass die gestreuten Körper sich als Zwischenschicht zwischen den beiden Bahnen befinden. Diese Körper drücken sich als Erhebungen in die Deckschichten ein und bilden durch ihre Streuung eine Kornstruktur. Besonders geeignet ist eine solche Strukturierung beispielsweise für Tischplatten und Schranktüren.

Als vielseitigster Strukturträger ist eine Metallfolie oder ein Metallband zu nennen, da sie dauerhaft ist und ihre Oberfläche mit jeder gewünschten Struktur versehen werden kann und somit alle denkbaren Schichtstoffprägedekore damit erzeugt werden können. Als Material für eine solche Folie oder Band kann beispielsweise Messing, Nickel, Kupfer, Stahl und dgl. verwendet werden. Zur Steigerung der Oberflächenhärte kann die Folie nach Einbringen der Struktur noch hartverchromt werden.

Zum Einbringen der Struktur in die Metallfolie gibt es viele Möglichkeiten aufgrund der Vielzahl der Bearbeitungsmöglichkeiten von Metall. Als wohl einfachste Möglichkeit ist das Schleifen der Folienoberfläche zu nennen. Die hiermit erzielbare Strukturierung beschränkt sich auf eine Schleifspurenstruktur.

Eine weitere Möglichkeit ist das thermische Spritzen einer geeigneten Metall-Legierung auf die Folienoberfläche. Hierbei wird ein Metalldraht oder Pulver in einer Spritzflamme, einem Lichtbogen oder Plasma aufgeschmolzen und die Metallpartikel mittels Druckluft, einem Treibgas oder dem Plasma auf die zu beschichtende Oberfläche geschleudert. Je nach dem gewählten Verfahren haften diese Metallpartikel durch teilweise Diffusion in die Oberfläche oder durch ein Verschweissen mit derselben. Durch entsprechende Führung der Spritzpistole kann eine Struktur auf der Folienoberfläche erzielt werden, die sich als Prägestruktur für Schichstoffe eignet. Vorteilhafterweise wird man bei der Beschichtung eine solche Legierung wählen, die auf dem Folienwerkstoff gut haftet und gleichzeitig eine hohe Oberflächenhärte ergibt.

Eine Fein- oder Grobkornstruktur lässt sich auch durch Strahlen der Metallfolie mit Hartmetallkugeln oder Sand herstellen.

Die Strukturierung der Metallband- oder Metallfolienoberfläche kann in an sich bekannter Weise durch Abformen unter Druck einer profilierten Trommel oder Walze erfolgen. Man kann sich dazu eines Duo-Walzengerüstes, wie es beim Kaltwalzen von Bändern verwendet wird, bedienen. Eine der Arbeitswalzen oder beide tragen eine dem gewünschten Muster entsprechende positive Strukturierung und prägen beim Durchlauf des Metallbandes durch den Walzenspalt das entsprechende negative Muster in die Metalloberfläche des Strukturträgers ein. Sind beide Arbeitswalzen strukturiert, so erhält man einen zweiseitigen Strukturträger, andernfalls einen einseitigan. Zur Profilierung der Trommel oder Walze eignet sich beispielsweise ein Gravurverfahren durch Ätzen oder das aus der Druckindustrie bekannte Molettieren, wobei eine dem negativen Muster entsprechende kleine Walze das Muster bei gleichzeitiger Umdrehung über den Walzenumfang und linearem Vorschub entlang einer Walzenmantellinie die Strukturierung in die Walze einprägt.

Eine der elegantesten Methoden zur Strukturierung dieser Metallfolie erfolgt durch an sich bekanntes Ätzen, da hiermit jedes beliebige Muster eingebracht werden kann. Zur Herstellung der Atzgravur eignen sich praktisch alle bekannten Verfahren, wie beispielsweise fotographische Reproduktionsverfahren, wobei eine fotoempfindliche Schicht auf die Folienoberfläche aufgetragen wird, die anschliessend über ein das Muster darstellendes Negativ belichtet und entwickelt wird. Die dabei stehenbleibenden Flächen schützen die Folie vor dem Ätzangriff, während die freien Flächen vom Ätzmedium bis zur gewünschten Tiefe abgetragen werden. Weitere mögliche Verfahren sind beispielsweise das Aufdrucken von Atzresistflächen mit Druckwalzen, das lückenhafte Aufspritzen oder Aufschlämmen solcher Lacke oder ähnliche Verfahren, die eine mustergerechte Abdeckung gegen den Ätzmittelangriff erlauben oder eine Prägeätzgravur, wobei die Folienoberfläche mit einer Wachsschicht oder einer in den Eigenschaften ähnlichen Schicht überzogen wird, in die eine profilierte Walze ein Muster eindrückt. Die dadurch vom Wachs freigelegten Stellen in der Folienoberfläche werden von einem Ätzmedium angegriffen und bis zur gewünschten Tiefe abgetragen. Durch mehrfache Wiederholung des Ätzverfahrens lassen sich stufenförmige Ätzvertiefungen erzielen, die zur Erzeugung interessanter Prägedekore dienen können.

Eine weitere Möglichkeit zur Erzeugung eines metallischen Strukturträgers besteht in der galvanischan Abscheidung eines Metalls, z.B. von Nikkel auf einer positiv strukturierten Unterlage, die beispielsweise zur Erzielung der benötigten Leitfähigkeit aus einem versilberten Kunststoff bestehen kann. Entsprechend der Unterlagenstrukturierung bildet sich auf der Unterlage eine Metallfolie mit der gewünschten negativen Strukturierung aus, die nach Erreichen der benötigten Schichdicke, von der Unterlage abgelöst wird und anschliessend als Strukturträger dient. Falls erforderlich kann die Metallfolie zur Steigerung der Oberflächenhärte noch hartverchromt werden. Besonders vorteilhaft ist es, wenn als Unterlage anstelle einer ebenen Fläche eine bemusterte Trommel gewählt wird, die mit einer von Umfang, Eintauchtiefe und Abscheidungsgeschwindigkeit des Metalls auf der Trommel abhängigen Frequenz im galvanischen Bad gedreht wird. Bei entsprechend gewählter Drehfrequenz hat die auf der Unterlage abgeschiedene Metallfolie die benötigte Schichtdicke bei Verlassen des Bades und kann kontinuierlich von der Unterlage abgelöst werden.

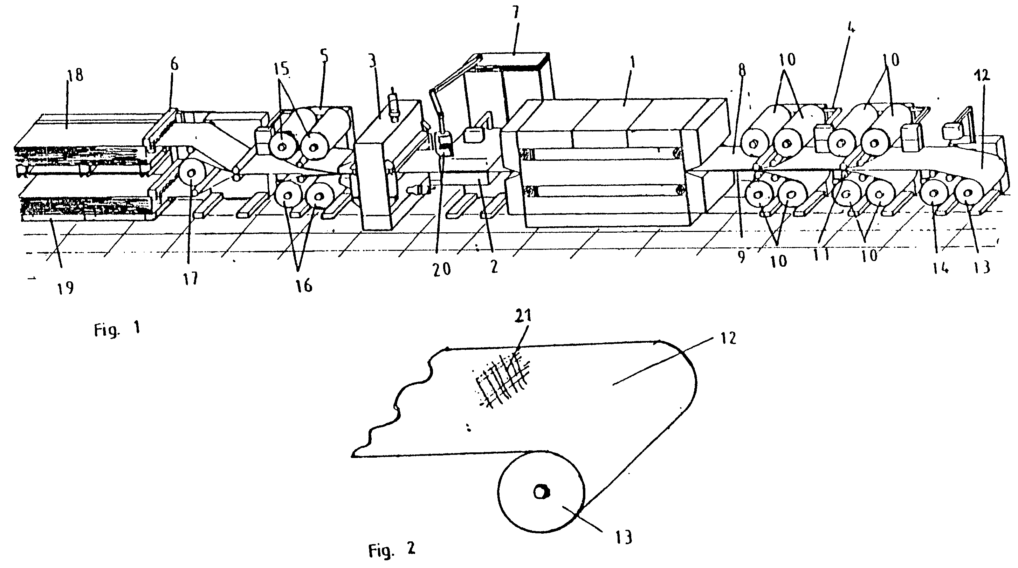

Die zur Durchführung des erfindungsgemässen Verfahrens verwendete Vorrichtung wird anhand der beigefügten Zeichnung beschrieben, in der Fig. 1 eine produktionsanlage zur kontinuierlichen Herstellung von Schichtstoffen und Fig. 2 den in Fig. 1 dargestellten zweiseitigen Strukturträger in Draufsicht darstellen.

Die in Fig. 1 schematisch gezeigte Vorrichtung besteht aus einer kontinuierlich arbeitenden Laminiermaschine 1, einer Sprühwasserkühleinrichtung 2, einer Schleifstation 3, einer Abwickeleinheit 4 mit Vorratsrollen 10, einer Wickelstation 5 mit Rollen 15, 16, einer Tafelschneidestation 6, einem Schaltschrank 7 mit Datenterminal 20 und einer aus dem Strukturträger 12 mit Prägefolienrollen 13, 14 und einer Prägefolienaufwickelrolle 17 gebildeten Strukturiereinrichtung.

Die mit Harz imprägnierten Papierbahnen 8, 9 werden gemäss dem Aufbau des Schichtstoffes von Rollen 10 abgewickelt und über Umlenkrollen 11 in die kontinuierlich arbeitende Laminiermaschine 1 geführt. Zwischen den geschichteten Papierbahnen 8 und 9 befindet sich der Strukturträger 12, der von der Rolle 13 abgewickelt wird, aus einer Metallfolie oder einer der oben genannten Materialien besteht, die zweiseitig nach einem der oben angeführten Verfahren, beispielsweise dem Ätzverfahren, mit den gewünschten Prägedekoren strukturiert wurde. Zum vereinfachten Strukturwechsel befindet sich neben der Rolle 13 eine weitere Prägefolienrolle 14, die mit anderen Prägedekoren versehen ist. Wird eine auf der Rolle 13 nicht vorhandene Strukturierung gewünscht, so ist nur die Folie von Rolle 14 anstelle der Folie 12 einzuführen.

In der aus einer Doppelbandpresse bestehenden Laminiermaschine 1 härten die beiden geschichteten Papierbahnen 8 und 9 unter Hitze und Druck zu zwei Schichtstoffbahnen aus, deren Oberflächen durch die Prägefolie 12 getrennt werden. Das negative Muster 21 des Strukturträgers 12 gemäss Fig. 2 der Zeichnung prägt sich dabei unter dem von den Pressbändern der Maschine 1 ausgeübten Druck in die Oberfläche der jeweiligen Schichtstoffbahn ein.

Nach dem Verlassen der Laminiermaschine 1 laufen die zwei Schichtstoffbahnen durch eine Kühlstation 2, wo sie zur Abkühlung mit Sprühwasser bespritzt werden. Danach laufen sie durch eine mit Diamantbürsten besetzte Schleifstation 3, die mit einer diamantbestückten Rundbürste und einer z.B. gummierten Stützwalze oder auch mit zwei gleichsinnig drehenden diamantbestückten Rundbürsten ausgestattet sein kann. Die eine oder die beiden aussen liegenden Rückseiten der Schichtstoffbahnen werden dort mittels Bürsten zur besseren Haftung beim Verleimen auf dem Trägermaterial aufgerauht. Da die Oberfläche der Schichtstoffe jeweils auf dem Strukturträger aufliegt, kann sie durch die Diamantbürsten nicht beschädigt werden.

Hinter der Schleifstation 3 werden die zwei Schichstoffbahnen getrennt auf Rollen 15 und 16 in der Wickelstation 5 aufgewickelt, während die Prägefolie auf einer eigenen Rolle 17 Platz findet. Alternativ zum Aufwickeln der Schichtstoffbahnen können diese auch einer Schneidestation 6 zugeführt werden, wo sie gleich in Schichtstofftafeln 16 der gewünschten Länge zerteilt werden. Diese Schichtstofftafeln werden zum leichteren Abtransport dabei auf Paletten 19 gestapelt.

Auf der Prägefolie 12, die in Fig. 2 gezeigt ist, können sich je nach Erfordernis verschiedene Strukturierungen 21 befinden. Zum Wechsel der Oberflächenstruktur für die Schichstoffbahn wird dann der Druck von den Pressbändern der Laminiermaschine 1 genommen und die Prägefolie 12 solange zwischen den Rollen 13 und 17 vor- oder zurückgespult, bis der Anfang des gewünschten Musters 21 erreicht ist. Anschliessend werden die Pressbänder wieder mit Druck beaufschlagt und die Schichtstoffproduktion mit der gewünschten Oberflächenstruktur wird fortgesetzt. Der Verfahrensablauf wird vom Schaltschrank 7 aus automatisch gesteuert, wobei die zum Produktionsablauf benötigten Parameter über das Datenterminal 20 eingegeben werden.

**Patentansprüche**

1. Verfahren zur kontinuierlichen Herstellung von Schichtpreß-Stoffen mit einer in die Oberfläche eingeprägten Strukturierung, bei dem die aus duroplast-harzimprägnierten Papierbahnen (8, 9) geschichtete Bahn mit einer Negativ-Strukturträgerprägebahn (12), die von einer Vorratsrolle (13, 14) abgewickelt wird, mit gleicher Geschwindigkeit zusammengeführt wird, das Schichtgebilde einer Pressung mit anschließender Abkühlung unterworfen und die Bahn mit positiv strukturierter Oberfläche vom Strukturträger getrennt, deren nichtstrukturierte, rückseitige Oberfläche aufgerauht und diese Bahn anschließend auf Rollen (15, 16) aufgewickelt bzw. in Platten beliebiger Länge gestapelt wird unter gleichzeitigem Aufwickeln des Strukturträgers, dadurch gekennzeichnet, daß die nicht unter 100 Mikrometer dicke Negativ-Strukturträgerprägebahn (12) eine metallische, harte, verschleißfeste Oberfläche besitzt und mit verschiedenen Prägemustern versehen ist, daß die Strukturträgerprägebahn (12) vor- oder zurückgefahren wird, bis der Anfang des gewünschten Musters erreicht ist, daß man die Materialbahnen (8, 9) so schichtet, daß die Oberflächen ihrer Rückseiten jeweils auf einer Fläche der Preßeinrichtung (1) und ihrer Vorderseiten jeweils auf einer Seite des Strukturträgers (12) liegen, so daß der Strukturträger zwischen zwei Materialbahnen (8, 9) geführt wird und daß das Aufrauhen der Rückseiten der Materialbahnen (8, 9) mittels Diamantbürsten erfolgt.

2. Verfahren nach Anspruch 1, dadurch gekennzeichnet, daß bei höheren Verfahrenstemperaturen die Materialbahnen (8, 9) entlang des Strukturträgers (12) am strukturlosen Preßrand Vorderseite gegen Vorderseite verklebt sind.

3. Vorrichtung zur Durchführung des Verfahrens nach Anspruch 1 oder 2, mit einer aus oberen und unteren Vorratsrollen (10) bestehenden Abwickeleinheit (9) für die harzimprägnierten Bahnen (8, 9), mit einer Abspuleinheit für den Strukturträger, mit einer als Doppelbandpresse ausgebildeten Laminiermaschine (1), mit einer Kühleinrichtung (2), einer Schleifstation (3) für die Rückseite der Materialbahnen (8, 9), mit einer Wickelstation (5) mit Rollen (15, 16) für den Schichtpreßstoff bzw. mit einer Tafelschneidestation (6) zur Aufteilung der Schichtpreß-Stoffbahn in Schichtstofftafeln (18) beliebiger Länge und deren Aufstapelung in Paletten (19) und einer aus dem Strukturträger (12), den Strukturträgerrollen (13, 14) und einer Strukturträgeraufwickelrolle (17) gebildeten Strukturiereinrichtung, dadurch gekennzeichnet, daß die Kühleinrichtung als Sprühwasserkühleinrichtung (2) ausgebildet ist, daß ein Schaltschrank (7) mit Datensichtgerät (20) vorgesehen ist, daß die Schleifstation (3) mit Diamantbürsten ausgestattet ist, daß der Strukturträger (12) mit verschiedenen Prägedekoren auf beiden Seiten oder mit mehreren verschiedenen Prägedekoren ausgestattet ist, bei denen die Summen der Einzellängen jedes Dekors auf einer Seite des Strukturträgers genau der Gesamtlänge desselben entspricht, daß der Strukturträger (12) zwischen den beiden die Vorderseite der Schichtpress-Stoffe bildenden duroplast-harzimprägnierten Papierbahnen (8, 9) angeordnet ist und daß die Strukturiereinrichtung mit Motoren ausgestattet ist, so daß der Strukturträger (12) zwischen der Strukturträgeraufwickelrolle (17) und den Strukturträgerrollen (13, 14) vor- und rückspulbar ist.

4. Vorrichtung nach Anspruch 3. dadurch gekennzeichnet, daß der Strukturträger (12) auf einer Seite oder auf beiden Seiten eine Strukturierung aufweist.

5. Vorrichtung nach Anspruch 3 oder 4, dadurch gekennzeichnet, daß der Strukturträger (12) aus strukturiertem duroplastischem, wärmebeständigem Schichtstoff mit metallischer Oberfläche, strukturierter Metallfolie oder strukturiertem Metallband besteht.

6. Vorrichtung nach Anspruch 5, dadurch gekennzeichnet, daß der Strukturträger (12) durch Verpressen einer Fasermatrize mit duroplastischem, chemisch oder wärmehärtendem Bindemittel zwischen negativ geprägten Releasepapieren, Pergament, Büttenpapier, Glasfaservlies, Metallgewebe oder textilem Gewebe hergestellt wird, und nach dem Aushärten, wie bei Kunststoffoberflächen an sich bekannt, durch Verkupfern und dekorativem Hartverchromen gegen Verschleiß geschützt wird.

7. Vorrichtung nach Anspruch 5, dadurch gekennzeichnet, daß der Strukturträger (12) aus einer zwischen zwei metallischen Schichten eingelegten Beiläuferbahn wie Pergament. Büttenpapier, Glasfaservlies, Metallgewebe, textiles Gewebe oder einem metallischen Band mit Kleberschicht und aufgestreuten Körpern und einer metallischen Abdeckschicht zur Abbildung von Gewebestrukturen bzw. Erhebungen der Körper besteht, wobei die einzelnen Schichten mit einer wärmebeständigen Duroplastkleberschicht miteinander verbunden sind.

8. Vorrichtung nach Anspruch 5, dadurch gekennzeichnet, daß der Strukturträger (12) der aus zwei metallischen Schichten, die mit einer wärmebeständigen Duroplastkleberschicht miteinander verbunden sind, als Folien-Kleber-Paket mit aufgelegten Beiläuferbahnen wie Pergament, Büttenpapier, Glasfaservlies. Metallgewebe oder textilem Gewebe in die Reaktionszone der Doppelbandpresse (1) gefahren wird, wo die Metall-Folienoberfläche durch die Beiläuferbahn gegen den Kleberfilm geprägt und der Kleberfilm durch Wärmezufuhr ausgehärtet wird.

9, Vorrichtung nach Anspruch 5, dadurch gekennzeichnet, daß die Strukturierungsfläche des Strukturträgers (12) durch Schleifen, Sandstrahlen, Kugelstrahlen, thermisches Aufspritzen einer Metall-Legierung, Abformen einer profilierten Walze oder Trommel unter Druck (Dessinieren), Ätzen, Mehrfachstufenätzen und dergleichen gebildet ist.

10. Vorrichtung nach Anspruch 5, dadurch gekennzeichnet, daß der Strukturträger (12) aus einer auf einer strukturierten Unterlage galvanisch abgeschiedenen Metallfolie besteht. die nach Erreichen der benötigten Schichtdicke von der Unterlage abgelöst wird.

11. Vorrichtung nach Ansprüchen 5 bis 10, dadurch gekennzeichnet, daß die Oberfläche des Strukturträgers (12) zum Schutz gegen Verschleiß mit einer dekorativ matten oder glänzenden, galvanisch abgeschiedenen zum Beispiel Metall-Hartchromschicht versehen ist.

## Revendications

1. Procédé pour la fabrication en continu de stratifiés, avec une structuration empreinte dans la surface, procédé dans lequel la bande constituée par empilage de bandes de papier (8, 9) imprégnées d'une résine thermo-durcissable est guidée conjointement à la même vitesse avec une bande de gaufrage (12) portant la structure négative et qui est dévidée d'un rouleau de réserve (13, 14), l'ensemble ainsi empilé étant soumis à une pression suivie d'un refroidissement et la bande comportant une surface structurée positivement étant séparée du support de structure, tandis que sa surface arrière non structurée est rendue rugueuse et cette bande est ensuite enroulée sur des rouleaux (15, 16) ou bien empilée en panneaux de longueur quelconque, tandis que le support de structure est simultanément enroulé, procédé caractérisé en ce que la bande de gaufrage (12) portant la structure négative et dont l'épaisseur n'est pas inférieure à 100 μm, comporte une surface métallique, dure, résistante à l'usure et est munie de différents motifs d'impression, la bande de gaufrage (12) portant la structure négative étant déplacée en avant ou en arrière jusqu'à ce que le début du motif souhaité soit atteint, les bandes de matériau (8, 9) étant empilées de façon que les faces arrières des empilages reposent respectivement sur une surface du dispositif de pressage (1), tandis que les faces avant reposent respectivement sur une face du support de structure (12), de sorte que ce support de structure est guidé entre deux bandes de matériau (8, 9), les faces arrières des empilages de bandes de matériau (8, 9) étant rendues rugueuses au moyen de brosses à diamants.

2. Procédé selon la revendication 1, caractérisé en ce que, pour des températures plus élevées mises en oeuvre dans le procédé, les bandes de matériau (8, 9) sont collées face avant contre face avant sur leur bord de pressage dépourvu de structure, le long du support de structure (12).

3. Dispositif pour la mise en oeuvre du procédé selon la revendication 1 ou la revendication 2, avec une unité de dévidage (4) pour les bandes imprégnées de résine (8, 9) constituée par des rouleaux de réserve supérieur et inférieur (10), avec une unité de dévidage pour le support de structure, avec une machine à stratifier (1) réalisée sous la forme d'une presse à double bande, avec un dispositif de refroidissement (2), une station de meulage (3) pour les faces arrières des bandes de matériau (8, 9), avec une station d'enroulement (5) avec des rouleaux (15, 16) pour le stratifié, ou bien avec une station de découpage de panneaux (6) pour diviser la bande de stratifié en panneaux de stratifiés (18) de longueur quelconque, et pour les empiler sur des palettes (19) et avec un dispositif de structuration constitué par le support de structure (12), les rouleaux de support de structure (13, 14) et un rouleau d'enroulement de support de structure (17), dispositif caractérisé en ce que le dispositif de refroidissement est réalisé sous la forme d'un dispositif de refroidissement par de l'eau vaporisée (2), une armoire de distribution (7) avec un dispositif de visualisation de données (20) étant prévue, la station de meulage (3) étant équipée de brosses à diamants, le support de structure (12) étant équipé de différents décors d'impression sur les deux faces ou bien avec plusieurs décors d'impression différents, pour lesquels la somme des longueurs individuelles de chaque décor sur une face du support de structure correspond exactement à la longueur totale de celui-ci, le support de structure (12) étant disposé entre les deux bandes de papier (8, 9) imprégnées de résine thermodurcissable, constituant les faces avant des stratifiés, et le dispositif de structuration étant équipé de moteurs, de sorte que le support de structure (12) est susceptible d'être dévidé en avant et en arrière entre le rouleau d'enroulement (17) du support de structure et les rouleaux de support de structure (13, 14).

4. Dispositif selon la revendication 3, caractérisé en ce que le support de structure (12) comporte une structuration sur une face ou sur les deux.

5. Dispositif selon la revendication 3 ou la revendication 4, caractérisé en ce que le support de structure (12) est constitué par un stratifié structuré en matière thermo-durcissable résistant à la chaleur avec une surface métallique, par une feuille de métal structurée ou bien par une bande de métal structurée.

6. Dispositif selon la revendication 5, caractérisé en ce que le support de structure (12) est réalisé par compression d'une matrice en fibres avec un liant durcissable, durcissant chimiquement ou thermiquement, entre des papiers anti-adhésifs, des papiers parcheminés, des papiers à la cuve, des nappes de fibres de verre, des tissus métalliques ou des tissus textiles, empreints négativement, et après le durcissement comme cela est connu en soi pour des surfaces en matière plastique, il est protégé contre l'usure par cuivrage et chromage dur décoratif.

7. Dispositif selon la revendication 5, caractérisé en ce que le support de structure (12) est constitué par une bande de bourrage en parchemin, papier à la cuve, nappes de fibres de verre, tissus métalliques, tissus textiles, insérée entre deux couches métalliques, ou bien par une bande métallique avec une couche adhésive et des corps dispersés sur cette couche et une couche métallique de recouvrement pour la reproduction de structures de tissus ou bien des saillies des corps, les différentes couches étant reliées ensemble par une couche adhésive en résine thermodurcissable résistante à la chaleur.

8. Dispositif selon la revendication 5, caractérisé en ce que le support de structure (12) qui est constitué de deux couches métalliques, qui sont reliées ensemble par une couche adhésive en résine thermo-durcissable résistante à la chaleur, est amené en tant que paquet de film adhésif recouvert de bandes de bourrage en parchemin, papier de cuve, nappes de fibres de verre, tissus métalliques ou tissus textiles, dans la zone de réaction de la presse à double bande (1), ou les surfaces en film métallique sont empreintes à travers la bande de bourrage contre le film adhésif, et ce film adhésif est durci par apport de chaleur.

9. Dispositif selon la revendication 5, caractérisé en ce que la surface de structuration du support de structure (12) est formée par meulage, sablage, grenaillage, projection thermique d'un alliage métallique, déformation sous pression par un cylindre ou un tambour profilé, rongeage, rongeage en plusieurs étapes, et par des moyens analogues.

10. Dispositif selon la revendication 5, caractérisé en ce que le support de structure (12) est constitué par un film métallique déposé galvaniquement sur un support structuré, ce film métallique étant détaché du support lorsque l'épaisseur de couche nécessaire a été atteinte.

11. Dispositif selon les revendications 5 à 10, caractérisé en ce que la surface du support de structure (12) est munie pour la protéger contre l'usure, d'une couche métallique décorative, mate ou brillante, déposée galvaniquement par exemple, une couche de chrome dur.

## Claims

1. Method, for the continuous manufacture of pressed laminated materials with a texturing impressed into the surface, in which the web of laminated paper webs (8, 9) impregnated with thermosetting resin is guided together at the same speed with a negative texture carrier embossing web (12), which is unwound from a supply reel (13, 14), the laminate formation is subjected to a pressing with subsequent cooling-down and the web with positively textured surface is separated from the texture carrier, the non-structured rear surface of which is roughened, and this web is then either wound on reels (15, 16) or stacked in plates of desired length with simultaneous winding-up of the texture carrier, characterised thereby, that the not less than 100 micrometres thick negative texture carrier embossing web (12) possesses a hard metallic, wear-resistant surface and is provided with different embossing patterns, that the texture carrier embossing web (12) is driven forwards or back until the start of the desired pattern is reached, that one so laminates the material webs (8, 9) that the surfaces of the rear sides each time lie on a surface of the pressing equipment (1) and the surfaces of their front sides each time lie on one side of the texture carrier (12) so that the texture carrier is guided between two material webs (8, 9) and that the roughening of the rear sides of the material webs (8, 9) take place by means of diamond brushes.

2. Method according to claim 1, characterised thereby, that in the case of higher process temperatures, the material webs (8, 9) are glued together front side against front side at the texture-free press edge along the texture carrier (12).

3. Apparatus, for the performance of the method according to claim 1 or 2, with an unwinding unit (4), consisting of upper and lower supply reels (10), for the resin-impregnated webs (8, 9), with an unreeling unit for the texture carrier, with a laminating machine (1) constructed as double-band press, with a cooling equipment (2), with a grinding station (3) for the rear sides of the material webs (8, 9), with either a winding station (5) with reels (15, 16) for the pressed laminated material or with a panel-cutting station (6) for dividing the pressed laminated material web into laminated material panels (18) of any desired length and their stacking in pallets (19) and a texturing equipment formed of the texture carrier (12), the texture carrier reels (13, 14) and a texture carrier winding-up reel (17), characterised thereby, that the cooling equipment is constructed as water spray cooling equipment (2), that a switch box (7) with data-viewing device (20) is provided, that the grinding station (3) is equipped with diamond brushes, the texture carrier (12) is equipped with different embossing décors on both sides or with several different embossing patterns, for which the sums of the individual lengths of all décors on one side of the texture carrier corresponds exactly to the total length of the same, that the texture carrier (12) is arranged between both paper webs (8, 9) impregnated with thermosetting plastics resin and forming the front side of the pressed laminated materials and that the texturing equipment is equipped with motors so that the texture carrier (12) is windable forwards and backwards between the texture carrier winding-up reel (17) and the texture carrier reels (13, 14).

4. Apparatus according to claim 3, characterised thereby, that the texture carrier (12) displays a texturing on one side or on both sides.

5. Apparatus according to claim 3 or 4, characterised thereby, that the texture carrier (12) consists of textured thermosetting, heat-resistant laminated material with metallic surface, textured metal foil or textured metal tape.

6. Apparatus according to claim 5, characterised thereby, that the texture carrier (12) is made by compression of a fibre matrix with thermosetting plastics, chemically or thermally hardening binding means between negatively embossed release papers, parchment, hand-made paper, glass fibre fleece, metal weave or textile fabric and is, after the hardening, protected against wear by copper plating and decorative hard-chromium plating, as in itself known for synthetic material surfaces.

7. Apparatus according to claim 5, characterised thereby, that the texture carrier (12) consists of an auxiliary web laid between two metallic layers and such as parchment, hand-made paper, glass fibre fleece, metal weave, textile fabric or a metallic tape with adhesive layer and bodies scattered thereon and a metallic covering layer for the imaging of fabric structures or protrusions of the bodies, wherein the individual layers are one connected with the other by a heat-resistant thermosetting plastics adhesive layer.

8. Apparatus according to claim 5, characterised thereby, that the texture carrier (12), which consists of two metallic layers which are one connected with the other by a heat-resistant thermosetting plastics adhesive layer, is driven as packet of foil and adhesive substance with overlaid auxiliary webs such as parchment, handmade paper, glass fibre fleece, metal weave or textile fabric into the reaction zone of the double-band press (1), where the metal film surface is pressed by the auxiliary web against the adhesive film and the adhesive film is hardened by supply of heat.

9. Apparatus according to claim 5, characterised thereby, that the texturing surface of the texture carrier (12) is formed by grinding, sandblasting, shot-blasting, thermal spraying of a metal alloy, copy-forming of a profiled roller or drum (punching), etching, multiple-stage etching or the like.

10. Apparatus according to claim 5, characterised thereby, that the texture carrier (12) consists of a metal film precipitated galvanically onto a textured base and detached from the base after attainment of the required layer thickness.

11. Apparatus according to claims 5 to 10, characterised thereby, that the surface of the texture carrier is provided with a decorative mat or shiny, galvanically precipitated, for example metal hard chromium layer for protection against wear.

Fig. 1

Fig. 2